**Europäisches Patentamt**

**European Patent Office**

**Office européen des brevets**

(19)

(11) Veröffentlichungsnummer : **0 338 479 B1**

(12)

# EUROPÄISCHE PATENTSCHRIFT

(45) Veröffentlichungstag der Patentschrift :
**26.08.92 Patentblatt 92/35**

(51) Int. Cl.$^5$ : **B01D 39/18, B01D 39/16**

(21) Anmeldenummer : **89106843.9**

(22) Anmeldetag : **17.04.89**

(54) **Staubfilterbeutel, dessen Herstellung und Verwendung.**

(30) Priorität : **18.04.88 DE 3812849**

(43) Veröffentlichungstag der Anmeldung :
**25.10.89 Patentblatt 89/43**

(45) Bekanntmachung des Hinweises auf die
Patenterteilung :
**26.08.92 Patentblatt 92/35**

(84) Benannte Vertragsstaaten :
**AT BE CH DE ES FR GB IT LI NL SE**

(56) Entgegenhaltungen :
**EP-A- 0 106 908**
**GB-A- 2 036 591**
**US-A- 4 093 437**

(73) Patentinhaber : **Steinbeis Gessner GmbH**
**Rosenheimer Strasse 88**
**W-8204 Brannenburg (DE)**

(72) Erfinder : **Klimmek, Albrecht**
**Mittenkirchener Strasse 9**
**W-8206 Wiechs (DE)**
Erfinder : **Raabe, Ernst**
**Göttingerstrasse 15a**
**W-8206 Bruckmühl (DE)**

(74) Vertreter : **Hansen, Bernd, Dr.rer.nat. et al**
**Hoffmann, Eitle & Partner Patentanwälte**
**Arabellastrasse 4 Postfach 81 04 20**
**W-8000 München 81 (DE)**

## Beschreibung

Die Erfindung betrifft einen Staubfilterbeutel aus einer Filterpapier-Aussenlage und einem innenliegenden Vlies, dessen Herstellung und Verwendung.

Die Anforderungen, die an den Filter bzw. die filtertechnischen Eigenschaften des Staubfilterbeutels gestellt werden, sind vielfältig und zum Teil auch gegenläufig.

(1) hoher Abscheidegrad für die Stäube (nahe 100 %);

(2) geringer Luftwiderstand, um eine hohe Gerätesaug- oder Blasleistung zu erreichen;

(3) geringe Verstopfungsneigung, um eine hohe Gerätesaug- oder Blasleistung zu erhalten und um ein häufiges Wechseln des Beutels und/oder des Filterelementes zu verhindern;

(4) mechanische Stabilität, die ein Platzen oder Aufreissen des Beutels oder Filterelementes bei Verstopfung verhindern soll.

Die Verwendung von porösen Vliesmaterialien, die zusammen mit Filterpapieren zu doppellagigen Staubfilterbeuteln verarbeitet werden, ist bekannt. Diese Kombination aus einem inneren Vlies und einer Filterpapieraussenlage sichert zwar einen geringen Luftwiderstand und eine geringe Verstopfungsneigung, die eingesetzten Vliesqualitäten sind jedoch offenstrukturiert und grossporig, so dass sie als Vorfilter für Grobstäube dienen, aber keine hohen Abscheidegrade im Feinstaubbereich ermöglichen.

Die ständig steigenden Hygieneanforderungen an die Gegebenheiten während des Staubsaugens und damit an das verwendete Filtermaterial zielen darauf ab, die aufgesaugten, häufig Allergien auslösenden Feinstäube im Staubfilterbeutel abzuscheiden und diese nicht über die Geräteluft wieder in den Raum gelangen zu lassen. In der nachstehenden Tabelle sind einige der kritischen Feinstäube mit Partikelgrössen angeführt.

| FEINSTÄUBE | PARTIKELGRÖSSE ($\mu$m) |
|---|---|
| Pollen | 10-80 |
| Sporen | 2-80 |
| Bakterien | 0,3-20 |
| Hausmilben | 100-500 |
| Milbenkot | 2-25 |
| Milbenkotstaub | 0,1-3 |
| Tabakstaub | 0,01-1,0 |
| Toner für Kopiergeräte | 5-20 |

Um eine Abscheidung dieser kritischen Feinstäube zu ermöglichen, wird in Staubsaugern den herkömmlichen Doppellagenbeuteln ein Mikrofilter (Feinfilter, Abluftfilter) zur Reinigung der Abluft nachgeschaltet. Die Mehrfachfiltration bedingt zwar höhere Abscheidegrade, jedoch ergeben sich bei der obigen Konzeption schwerwiegende Nachteile dadurch, dass die Abluftfilterfläche abhängig vom Gerätemodell nur 0,01 bis 0,025 m² beträgt und damit wesentlich kleiner gegenüber der Filterfläche des Staubfilterbeutels (0,2 bis 0,3 m²) ist. Die Anströmgeschwindigkeit der Luft, die zunächst den Filterbeutel und dann den Abluftfilter durchfliesst, wird an der Abluftfilterfläche wesentlich erhöht. Daraus resultiert zum einen, dass der Durchlassgrad für die Stäube am Abluftfilter ansteigt, und damit die Abscheidung nicht optimal verläuft, zum anderen erhöht sich die flächenspezifische Filterbelastung durch die Stäube am Abluftfilter, dessen Fläche wird sehr schnell verstopft, und der Filterwiderstand nimmt rasch zu. Somit wird auch ein häufiges Wechseln des Abluftfilters (nach 3 bis 4, spätestens 6 bis 8 Filterbeutelwechseln) erforderlich.

Beim Austausch eines gefüllten, verstopften Staubbeutels durch einen neuen, ergibt sich durch die nun grössere angesaugte Luftmenge eine höhere Anströmgeschwindigkeit am Abluftfilter, wodurch mit jedem Beutelwechsel ein unerwünschter Ausblaseffekt entsteht, der das Staubrückhaltevermögen dieser Abluftfilter zusätzlich reduziert.

Die bekannten Filterkombinationen zeigen üblicherweise nicht gleichzeitig einen hohen Abscheidegrad von Feinstäuben in Kombination mit einem geringen Luftwiderstand und einer damit geringen Verstopfungsneigung. Der Erfindung liegt die Aufgabe zugrunde, einen Staubfilterbeutel mit besonders guten filtertechnischen Eigenschaften durch Kombination entsprechender Filtermaterialien herzustellen, der gleichzeitig ein extrem hohes Staubrückhaltevermögen, vor allem für Feinpartikel, und einen geringen Luftwiderstand, sowie eine geringe Verstopfungsneigung, wodurch eine hohe Gerätesaugleistung auch bei zunehmender Beutelfüllung weitgehend erhalten bleibt, besitzt. Dieser Staubfilterbeutel soll vorzugsweise die mit dem Nachteil der starken Verstopfung behaftete Nachschaltung eines Abluftfilters überflüssig machen. Der Erfindung liegt weiter die Aufgabe zugrunde, ein Verfahren zur Herstellung des erfindungsgemässen Staubfilterbeutels und geeignete Verwendungszwecke bereitzustellen.

Die Aufgabe wird erfindungsgemäss durch einen Staubfilterbeutel aus einer Filterpapieraussenlage und einem innenliegenden Vlies gelöst, der dadurch gekennzeichnet ist, dass das Vlies ein Feinfaservlies mit einem Flächengewicht (ISO 536) von 10 bis 50 g/m², einer Luftdurchlässigkeit (DIN 53887) von 200 bis 1500 l/m²·s bei 2 mbar Druck, einem durchschnittlichen Faserdurchmesser von 0,5 bis 18 μm und einem Bruchwiderstand (DIN 53112) in der Längsrichtung von 2 bis 12 N/15 mm Streifenbreite und in der Querrichtung von 1 bis 10 N/15 mm Streifenbreite darstellt, und die Filterpapieraußenlage ein Flächengewicht (ISO 536) von 30 bis 80 g/m² und eine Luftdurchlässigkeit (DIN 53887) von 80 bis 500 l/m²·s bei 2 mbar Druck aufweist.

Als Feinfaservlies, das die entscheidende Komponente für einen hohen Abscheidegrad von Feinstäuben darstellt, wird bevorzugt ein Melt-Blown-Vlies verwendet. Dieses besteht im allgemeinen aus langen, feinen Fasern uneinheitlichen Durchmessers und kann in einem Schmelzblasverfahren (z.B. Exxon-Verfahren)hergestellt werden. Dabei wird das Fasermaterial geschmolzen, extrudiert, beim Austritt aus der Extrudierdüse mit heisser Luft verwirbelt, auf eine Auffangstation geblasen, auf einem Sieb abgelegt und schliesslich abgenommen.

Das Feinfaservlies kann aus einem thermoplastischen Material, vorzugsweise aus Polyolefin, Polyamid, Polyester oder Copolymeren davon, aufgebaut sein. Für die Herstellung des Feinfaservlieses eignen sich ferner Mikroglasfasern; aber auch Heissschmelzklebstoffe oder Haftschmelzklebstoffe sind für den Aufbau bevorzugt.

Um die mechanische Festigkeit des Feinfaservlieses zu steigern, kann man eine thermische Punktkalandrierung oder eine Imprägnierung bzw. Besprühung mit Bindemitteln durchführen. Hierbei kann das Feinfaservlies soweit in sich verfestigt werden, dass man auf ein Stützelement verzichten kann.

Nach einer bevorzugten Ausführungsform der Erfindung besitzt das Feinfaservlies ein Flächengewicht (ISO 536) im Bereich von 15 bis 35 g/m². Für die filtertechnischen Eigenschaften des Staubfilterbeutels ist es günstig, wenn das Feinfaservlies eine Dicke (DIN 53105) von 0,15 bis 0,4 mm, vorzugsweise 0,18 bis 0,3 mm, aufweist. Um eine hohe Gerätesaugleistung des Staubsaugers gewährleisten zu können, besitzt das Feinfaservlies vorzugsweise eine Luftdurchlässigkeit (DIN 53887) von 250 bis 600 l/m²·s bei 2 mbar Druck. Der Porendurchmesser des Feinfaservlieses beträgt vorteilhaft 25 bis 60 μm, vorzugsweise 30 bis 40 μm, und der durchschnittliche Faserdurchmesser liegt bevorzugt zwischen 1 und 3 μm. Der Abscheidegrad an der Filterfläche des Feinfaservlieses nach DIN 44956 weist Werte zwischen 80 und 93 % auf, wohingegen der Abscheidegrad nach der Palas-Methode Werte von 85 bis 98 % besitzt. Dabei lässt die Messmethode nach DIN 4495612 lediglich eine Aussage über das Gesamtrückhaltevermögen des Teststaubs mit Partikeln von 0 bis 80 μm zu. Von besonderer Bedeutung ist jedoch die Bestimmung des Durchlassgrades von Feinstpartikeln im Bereich von 0,3 bis 0,5 μm, was mit Hilfe des Palas-Filterprüfstandes ermöglicht wird. Das Feinfaservlies ist in einer bevorzugten Ausführungsform mit einer permanenten elektrostatischen Ladung versehen, um eine noch bessere Staubabscheidung von Feinpartikeln zu erreichen. Neben der rein mechanischen Filtration wirkt hier zusätzlich eine elektrische Filtration, bedingt durch eine elektrostatische Anziehung von Filtermaterial und entgegengesetzt geladenen Staubteilchen. Dabei tragen die Fasern des Vlieses vorzugsweise bipolare Ladungen. Die elektrostatische Aufladung lässt sich erreichen, indem man die Filtermaterialien bei der Vliesherstellung einem elektrischen Feld aussetzt. Die dabei eingesetzten Verfahren sind in der Literatur beschrieben, siehe z.B. Martin Davis, Electrostatic Melt Spinning Process Delivers Unique Properties, Non-Wovens World, September 1987, Seiten 51-54, oder Trouilhet, Y.; Moosmayer, P.; New Method of Manufacturing Non-Wovens by Electrostatic Laying, vorgetragen auf Index 81 Kongress.

Das Feinfaservlies kann hinsichtlich seiner mechanischen Stabilität durch ein Stützelement verstärkt werden. Hierbei kommen hochporöse Stützvliese zum Einsatz, die nach dem Nasslegeverfahren, Trockenlegeverfahren, Spunlaceverfahren oder Spun-Bond-Verfahren hergestellt sein können. Die Stützvliese bestehen aus Zellstoff, Synthesefasern bzw. -filamenten oder aus Mischungen daraus. Zur Verbesserung der mechanischen Festigkeit kann das Stützvlies mit natürlichen und/oder synthetischen Bindemitteln imprägniert und/oder beschichtet sein. Das gleiche Ziel lässt sich erreichen, indem man Bindefasern und/oder Schmelzbindefasern in das Vlies einbaut. Desweiteren besteht auch die Möglichkeit, das Stützvlies thermisch vollflächig, streifenförmig oder punktförmig zu verfestigen. Hierbei ist insbesondere das Heisskalandrieren als bevorzugtes Verfahren zu erwähnen.

Die für einen Einsatz in dem erfindungsgemässen Staubfilterbeutel geeigneten Stützvliese besitzen ein Flächengewicht (ISO 536) von 6 bis 40 g/m², wobei ein Bereich von 8 bis 20 g/m² bevorzugt ist. Günstige filtertechnische Werte lassen sich erreichen, wenn die Dicke (DIN 53105) des Stützvlieses 0,05 bis 0,35 mm beträgt. Besonders günstig ist dabei eine Dicke von 0,07 bis 0,25 mm. Die Luftdurchlässigkeit (DIN 53887) des Stützvlieses, die entscheidend für die Gerätesaugleistung des Staubsaugers, den Luftwiderstand und die Verstopfungsneigung dieses Filterelementes ist, liegt im Bereich von 500 bis 4000 l/m²·s bei 2 mbar Druck. Als besonders günstig hat sich der Bereich zwischen 1000 und 2000 l/m²·s bei 2 mbar Druck herauskristallisiert. Um die mechanische Stützfunktion erfüllen zu können, sollte der Bruchwiderstand (DIN 53112) des Stützvlieses in der Längsrichtung mehr als 8 N/15 mm Streifenbreite und in der Querrichtung mehr als 3 N/15 mm Streifenbreite betragen.

Das Feinfaservlies, das mechanisch durch ein Stützelement, insbesondere durch ein Stützvlies der oben beschriebenen Art, verstärkt sein kann, ist in dem erfindungsgemässen Staubfilterbeutel einem als Aussenlage dienenden Filterpapier vorgeschaltet. Diese Filterpapieraussenlage besteht aus lang- und kurzfaserigen Zellstoffen oder aus Mischungen von Zellstoffen und Synthesefasern und/oder Glasfasern. So können z.B langfaserige Zellstoffe aus Kiefernsulfat und die kurzfaserigen Zellstoffe aus Eukalyptus gewonnen werden. Als Synthesefasern sind z.B. Zelluloseregenerat (Titer 0,55 bis 6,6 dTex) und Stapelfasern, z.B. aus Polyester, Polyamid, Polyacrylnitril, Polyolefin, Polyvinylalkohol (Titer 0,33 bis 6,6 dTex) geeignet. Die Filterpapieraussenlage kann aus den genannten Materialien auf Nassvliesmaschinen (Literatur z.B. J. Lünenschloss und W. Albrecht; Vliesstoffe, Georg Thieme Verlag, Stuttgart, New York, 1982) hergestellt werden. Das aussenliegende Filterpapier kann zur Erhöhung der mechanischen Festigkeit mit natürlichen und/oder synthetischen Bindemitteln imprägniert und/oder beschichtet sein. Dabei wird als natürliches Bindemittel bevorzugt Stärke verwendet. Geeignete synthetische Binder sind z.B. Polyvinylacetate, Polyvinylalkohol und Polyacrylate. Die Festigkeit der Filterpapieraussenlage lässt sich auch verbessern, wenn man sie mit Bindefasern oder Schmelzbindefasern versieht. Ein bevorzugtes Polymer für die Bindefasern stellt dabei Polyvinylalkohol dar, wohingegen die Schmelzbindefasern z.B. aus Polyolefin, Polyamid oder Polyester, aufgebaut sind.

Um einen Staubfilterbeutel mit hohem Staubrückhaltevermögen und gleichzeitig einem geringen Luftwiderstand und einer geringen Verstopfungsneigung zu erhalten, sollten auch an die Produkteigenschaften der Filterpapieraussenlage vorteilhafterweise weitere spezifische Anforderungen gestellt werden. So beträgt im allgemeinen die Dicke (DIN 53105) des aussenliegenden Filterpapiers 0,10 bis 0,3 mm. Günstige Werte für die filtertechnischen Eigenschaften lassen sich erreichen, wenn die Luftdurchlässigkeit (DIN 53887) vorzugsweise 200 bis 400 l/m² s bei 2 mbar Druck aufweist, und der Porendurchmesser des aussenliegenden Filterpapiers 35 bis 80 μm beträgt. Als besonders günstig erweist es sich, wenn die Poren einen Durchmesser von 40 bis 70 μm besitzen. Eine ausreichende mechanische Stabilität der Filterpapieraussenlage ist erreicht, wenn der Bruchwiderstand (DIN 53112) in Längsrichtung 20 bis 70 N/15 mm Streifenbreite und in Querrichtung 15 bis 45 N/15 mm Streifenbreite beträgt. Der Berstdruck nach Mullen (DIN 53141) besitzt vorzugsweise Werte zwischen 0,7 und 2,5 bar. Der Staubabscheidegrad an der Filterfläche einer geeigneten Filterpapieraussenlage liegt nach DIN 44956 zwischen 75 und 98 %. Die Palas-Prüfmethode führt dabei zu Werten von 80 bis 96 % für den Staubabscheidegrad.

Ein Staubfilterbeutel mit besonders hoher filtertechnischer Qualität lässt sich mit einer bevorzugten Ausführungsform erreichen, bei der man eine Filterpapieraussenlage mit einem Flächengewicht von 40 bis 50 g/m², einer Dicke von 0,15 bis 0,25 mm, einer Luftdurchlässigkeit von 250 bis 360 l/m²·s bei 2 mbar Druck, einem Porendurchmesser von 50 bis 70 μm, einem Bruchwiderstand in Längsrichtung von 25 bis 40 N/15 mm Streifenbreite und in Querrichtung von 15 bis 25 N/15 mm Streifenbreite, einem Berstdruck (DIN 53141) von 0,9 bis 1,5 bar, einem Abscheidegrad nach DIN 44956 von 75 bis 98 % bzw. nach der Palas-Methode von 80 bis 96 %, mit einem Feinfaservlies mit einem Flächengewicht von 20 bis 25 g/m², einer Dicke von 0,18 bis 0,22 mm, einer Luftdurchlässigkeit von 400 bis 500 l/m²·s bei 2 mbar Druck, einem Porendurchmesser von 30 bis 40 μm, einem Bruchwiderstand in Längsrichtung von 2 bis 3 N/15 mm Streifenbreite und in Querrichtung von 1 bis 2 N/15 mm Streifenbreite, einem Berstdruck (DIN 53141) von 0,4 bis 0,5 bar, einem Abscheidegrad nach DIN 44956 von 88 bis 93 % bzw. nach der Palas-Methode von 94 bis 98 %, und mit einem Stützvlies mit dem Flächengewicht von 10 bis 15 g/m², einer Dicke von 0,07 bis 0,19 mm, einer Luftdurchlässigkeit von 1800 bis 2000 l/m²·s bei 2 mbar Druck, einem Bruchwiderstand in Längsrichtung von mehr als 12 N/15 mm Streifenbreite und in Querrichtung von mehr als 3 N/15 mm Streifenbreite, und einem Berstdruck (DIN 53141) von 0,3 bis 0,4 bar kombiniert.

Die in den obigen Abschnitten hinsichtlich ihres chemischen Aufbaus und ihrer für die erfindungsgemässe Lösung der gestellten Aufgabe vorgesehenen Produkteigenschaften klassifizierten Filtermaterialien des Staubfilterbeutels sind untereinander im Beutel in Abhängigkeit von den Möglichkeiten bei der Herstellung des Beutels und dessen Einsatzgebiet unterschiedlich kombiniert und verbunden.

Eine Ausführungsform besteht darin, das Feinfaservlies mit einem innenliegenden Stützelement über eine Längsklebenaht und gegebenenfalls zusätzlich über eine Verklebung im Bodenbereich des Beutels lose zusammenzufügen, so dass Vlies und Stützelement frei beweglich sind, und das Feinfaservlies durch die Filterpapieraussenlage und das innere Stützelement gehalten werden. Besteht das Stützelement aus einem Stützvlies, so sollte sich die lose Verbindung der beiden Vliesmaterialien aufgrund der Distanz zwischen den Vliesfiltern positiv auf das Filtrierergebnis auswirken.

Bei einer weiteren Ausführungsform ist das Feinfaservlies mit dem Stützelement über eine rasterförmige oder vollflächige Imprägnierung und/oder Beschichtung zu einer doublierten Kombination verarbeitet. Zum Kaschieren eignen sich spezielle Bindemittel, wobei Stärke, Acrylate und Vinylacetate als Kleber bevorzugt sind. Eine andere Möglichkeit besteht darin, das Feinfaservlies mit dem Stützelement über ein bindemittelfreies Thermobond-Verfahren, z.B. Kalandrieren, zu verbinden. Diese Zweilagen-Version kann auch erzeugt werden, indem man bei der Herstellung des Feinfaservlieses deren Feinfasern direkt auf das Stützelement ablegt und im thermoplastischen Zustand mit dem Stützelement verbindet. Die fertiggestellte zweilagige Kombination kann anschliessend im Staubfilterbeutel der Filterpapieraussenlage über das Feinfaservlies oder über das Stützelement zugewandt sein. Eine weitere vorteilhafte Kombination kann man erzeugen, wenn man bei der Herstellung des Feinfaservlieses dessen Feinfasern direkt auf die Filterpapieraussenlage ablegt und im thermoplastischen Zustand mit dem Filterpapier verbindet. Es empfiehlt sich, die Feinfasern bei der Herstellung der Zweilagen-Version aus Filterpapier und Feinfaservlies durch ein gleichzeitig zulaufendes Stützelement abzudecken, wenn das auf das Papier direkt abgelegte Feinfaservlies einer Abriebbeanspruchung ausgesetzt wird.

Die doublierten Zweilagen-Versionen bieten gegenüber den separaten, einlagigen Vliesen, Stützelementen und Filterpapieraussenlagen Vorteile bei der Verarbeitung dieser Materialien zu dem Staubfilterbeutel.

Sollen im fertiggestellten Beutel die einzelnen Filtermaterialien nur lose zusammengefügt sein, dann werden die Filterpapieraussenlage, das Feinfaservlies und gegebenenfalls das innere Stützelement auf separaten Bahnen der Beutelmaschine zugeführt und dort in an sich bekannter Weise zum Beutel verarbeitet. Verwendet man eine doublierte Kombination aus Feinfaservlies und Stützelement bzw. aus Feinfaservlies und Filterpapieraussenlage, dann wird man das Feinfaservlies und das Stützelement bzw. das Feinfaservlies und die Filterpapieraussenlage zu einer Bahn zusammenführen und verbinden, bevor sie der Beutelmaschine zugeführt werden. Die gebildete Kombination und die Filterpapieraussenlage bzw. das Stützelement werden anschliessend auf zwei Bahnen in die Beutelmaschine gezogen und nun in bekannter Weise zum Beutel weiterverarbeitet. Verwendet man ein in sich verfestigtes Feinfaservlies, dann kann man das Stützelement entbehren, und bei der Herstellung des Staubfilterbeutels werden die Filterpapieraussenlage und das verfestigte Feinfaservlies in zwei Bahnen der Beutelmaschine zugeführt und dort in bekannter Weise zum Beutel verarbeitet.

Der erfindungsgemässe Staubfilterbeutel kann aufgrund der ausgezeichneten filtertechnischen Eigenschaften zur effektiven Abscheidung von Stäuben mit einer Partikelgrösse von grösser gleich 0,1 μm in den verschiedensten Staubsaugern eingesetzt werden. Die Staubfilterbeutel können in ihrer Grösse und Form unterschiedlich konfektioniert werden und eignen sich zur Verwendung z.B. in Industriestaubsaugern, Bodenstaubsaugern, Handstaubsaugern. Ein spezielles Einsatzgebiet liegt in der Tonerabsaugung bei Kopiergeräten, wo feinste Tonerteilchen (grösser gleich 0,1 μm) entfernt und abgeschieden werden müssen. Eine zukunftsträchtige Verwendung der erfindungsgemäss konzipierten Filterkombination aus Filterpapieraussenlage, Feinfaservlies und gegebenenfalls Stützelement ist auch in der Halbleiterfertigung mit ihren extremen Anforderungen an die Reinheit der Luft in den Reinräumen, bei der Filmherstellung oder im Hospitalsektor zu sehen. Dabei ist die Filterkombination als Filterelement in Form von Flachfiltern, plissierten Filtern, Band- oder Rollenfiltern ausgebildet.

Die vorliegende Erfindung wird anhand der folgenden Figuren näher ausgeführt.

Fig. 1 Anordnung der einzelnen Filterkomponenten im erfindungsgemässen Staubfilterbeutel und als Filterelement;

Fig. 2 Beutelfertigung.

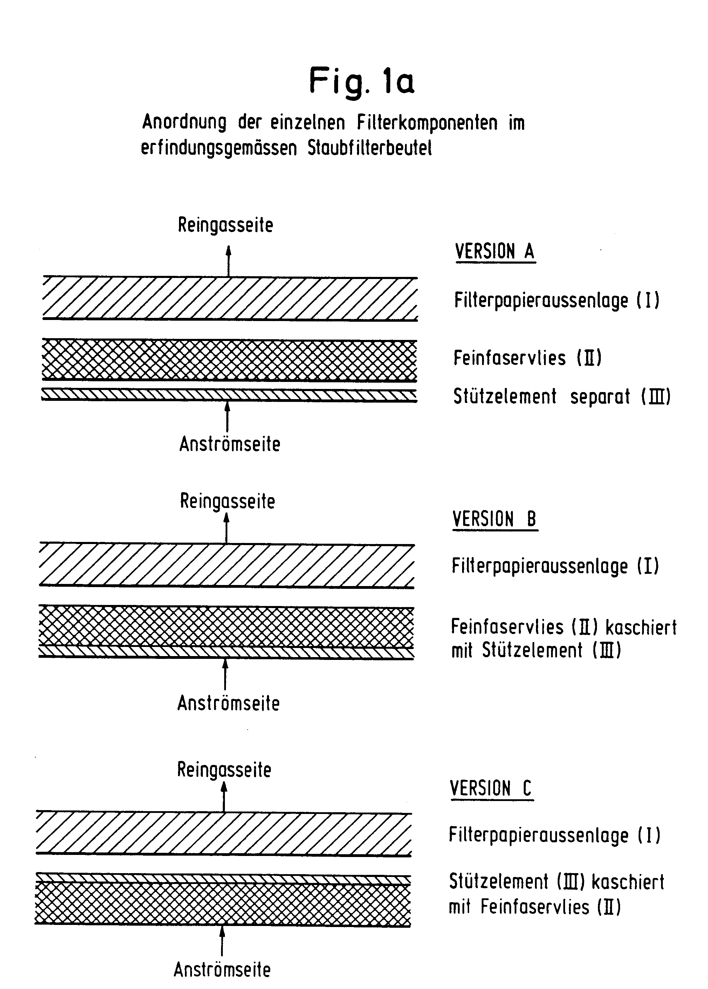

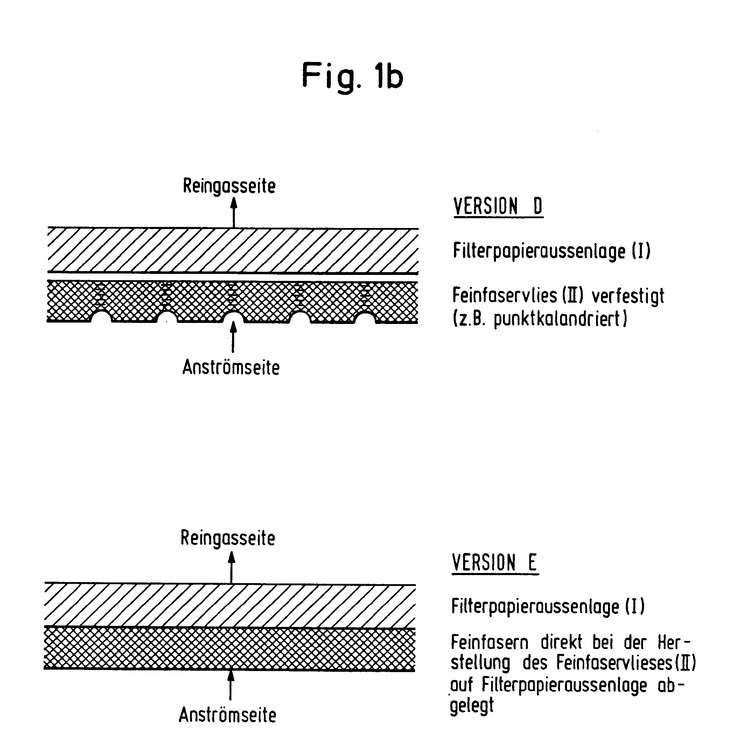

In Fig. 1 sind die verschiedenen Möglichkeiten wiedergegeben, wie die einzelnen Filtermaterialien untereinander angeordnet sind und den Staubfilterbeutel bzw. das Filterelement aufbauen. In der Version (A) ist das Feinfaservlies (II) zur Reingasseite hin mit der Filterpapieraussenlage (I) und zur Anströmseite der Luft hin mit einem innenliegenden, separaten Stützelement (III) abgedeckt. Vlies (II) und Stützelement (III) sind nur lose zusammengefügt und damit frei beweglich. Eine andere Möglichkeit besteht darin, das Stützelement (III) gleich bei der Feinfaservliesherstellung aufzukaschieren. Im Falle der Kaschierung der beiden Materialien kann man bei der Beutelherstellung der Filterpapieraussenlage (I) entweder das Feinfaservlies (II) (Version (B)) oder das Stützelement (III) (Version (C)) zuwenden. Die Version (D) zeigt eine Kombination von Filterpapieraussenlage (I) und verfestigtem Feinfaservlies (II). In der Version (E) ist das Feinfaservlies (II) direkt auf die Filterpapieraussenlage (I) abgelegt. Dies geschieht direkt bei der Feinfaservliesherstellung, wobei die Feinfasern noch zusätzlich mit einem Stützvlies als Abriebsschutz abgedeckt werden können.

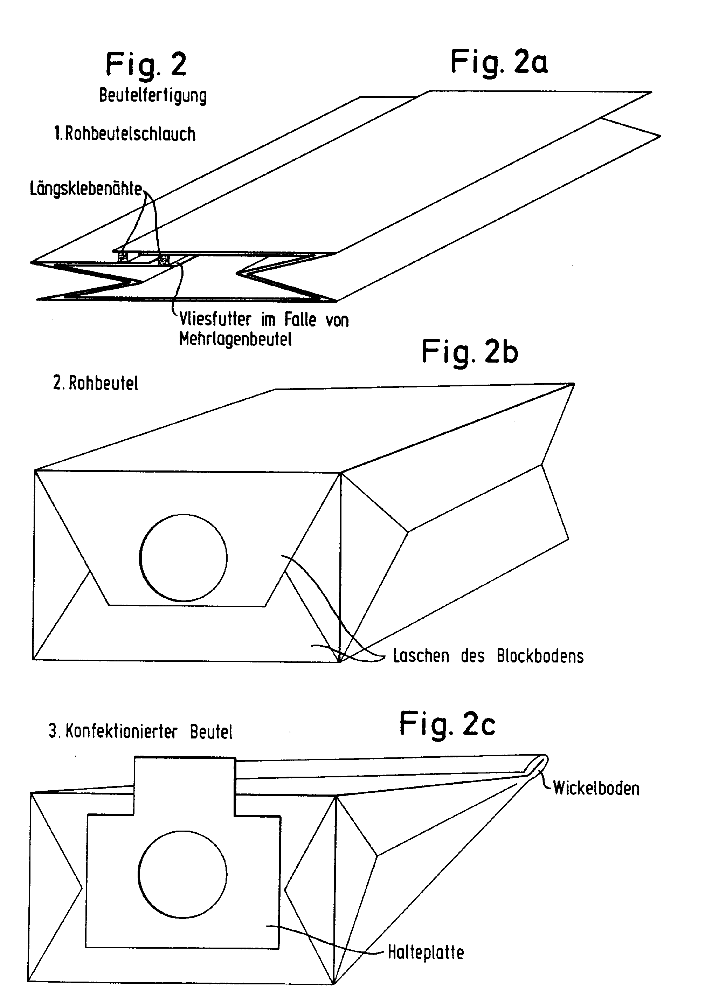

In Fig. 2 werden die Fertigungsschritte des Staubfilterbeutels in einer Beutelmaschine wiedergegeben.

Für die Herstellung qualitativ hochstehender Staubsaugerbeutel werden meist zwei Arbeitsgänge benötigt, die auf separaten Maschinenaggregaten erfolgen:

(a) Fertigung des Rohbeutels;

(b) Konfektionierung zum Fertigbeutel.

Für die Rohbeutelfertigung wird das Filterpapier in Rollenform der Maschine vorgelegt. Von einer Abwikkelstation wird die Papierbahn unter Anlegung einer gleichbleibenden Zugspannung in die Beutelmaschine eingezogen und zu einem Schlauch gebildet, der mit einer Längsnaht verschlossen wird (Fig. 2A). Danach wird der Schlauch auf die entsprechende Länge geschnitten und eines der Schlauchenden zu einem Boden verschlossen. Dies geschieht auf der Bodenfalztrommel durch Ausbildung von Laschen, die umgeschlagen und aufeinandergeklebt werden (Fig. 2B). Bei einem Mehrlagenbeutel muss die Rohbeutelmaschine mit einer Fütterungseinrichtung für die Vliesinnenlage versehen sein. In diesem Fall werden Vliesbahnen der ablaufenden Papierbahn vor der Schlauchbildung zugeführt. Man erhält somit Beutel im Beutel.

Dieser Rohbeutel - ob ein- oder mehrlagig - wird auf einer separaten Konfektioniermaschine mit einer für das vorgesehene Staubsaugermodell entsprechenden Halteplatte versehen und zwar meist auf dem vorher ausgebildeten Laschenboden (Fachausdruck = Blockboden). Das noch offene zweite Schlauchende wird in Form eines Wickelbodens durch Umschlagen und Verkleben des Schlauches verschlossen. (Fig. 2C).

Der erfindungsgemässe Staubfilterbeutel mit einer Filterpapieraussenlage, einem Feinfaservlies und gegebenenfalls einem Stützelement ermöglicht gegenüber den Filterversionen des Standes der Technik erstmals hohe Abscheidegrade für Stäube, speziell für Feinstpartikel, bei gleichzeitig geringer Verstopfungstendenz. Damit wird in der Technik des Staubsaugens und Staubabscheidens ein bemerkenswerter Fortschritt erreicht.

Die hervorragenden filtertechnischen Eigenschaften der erfindungsgemässen Filterkombination sollen im Vergleich zu den üblichen Filtertechniken anhand der Beispiele 1 bis 4 gezeigt werden.

In Beispiel 1 wird eine zweilagige Filterkombination aus einer Filterpapieraussenlage und einer Vliesfütterung, die den Stand der Technik für heute verwendete Doppellagenbeutel wiedergibt, verwendet. Das Beispiel 2 betrifft die Filterkombination aus Beispiel 1, wobei jedoch ein Abluftfilter nachgeschaltet ist. Mit diesem Beispiel kann die dem Stand der Technik entsprechende Mehrfachfiltration in Staubsaugern dargestellt werden. Die Beispiele 3 und 4 stehen für dreilagige Filterkombinationen des erfindungsgemässen Staubfilterbeutels. Unterschiede zwischen den zuletzt genannten Beispielen 3 und 4 bestehen in der Qualität der verwendeten Aussenpapierlage. In den einzelnen Beispielen werden zunächst die produktspezifischen Eigenschaften der verschiedenen Filtermaterialien und ihrer Kombinationen aufgeführt. Im Anschluss daran sind die Messwerte für die filtertechnischen Messgrössen, wie Abscheidegrad, Filterwiderstand vor und nach Bestaubung (Delta P1 bzw. Delta P2) angegeben. Die dabei angewandte Messmethode 1 nach DIN 4495612 betrachtet das Gesamtrückhaltevermögen des Teststaubs mit Partikeln von 0 bis 80 $\mu$m, wohingegen die Palas-Prüfmethode (Messmethode 2) den Durchlassgrad von Feinstpartikeln im Bereich von 0,3 bis 0,5 $\mu$m ermittelt. Bei der Prüfung auf dem Palas-Prüfstand muss man berücksichtigen, dass sich die Bedingungen für das herkömmliche Mehrfachfiltrationssystem (Beispiel 2) gegenüber den Praxisgegebenheiten wesentlich günstiger gestalten. Auf dem Palas-Prüfstand weisen die übereinandergelegten Einzelkomponenten der Filtersysteme alle die gleiche Grösse von 100 cm$^2$ auf und werden damit auch unter sich immer mit der gleichen Anströmgeschwindigkeit von 25 cm/Sekunde beaufschlagt. In der Praxis wird am Abluftfilter die Anströmgeschwindigkeit der Luft, bedingt durch die kleinere Fläche im Vergleich zum Filterbeutel, erhöht, wodurch ein höherer Durchlassgrad und eine grössere flächenspezifische Filterbelastung durch Staub zu erwarten ist.

Im folgenden sind die Methoden für die Bestimmung der Messgrössen, die zur Produktbeschreibung bzw. -charakterisierung der einzelnen Filtermaterialien in den Beispielen 1 bis 4 herangezogen werden, aufgeführt:

| | |
|---|---|
| Flächengewicht: | ISO 536 |
| Dicke: | DIN 53105; Tasterdruck= 0,2 bar |
| Luftdurchlässigkeit: | DIN 53887 |
| Bruchwiderstand: | DIN 53112 |
| Berstdruck nach Mullen: | DIN 53141 |
| Porendurchmesser: | Prüfmethode, beschrieben in "Fuel Filter Test Methods", Technical progress series, Vol.1, Seite 25, Society of Automotive Engineers, Inc. 485, Lexington Avenue, New York 17, N.Y. veröffentlicht: Januar 1961. |
| Faserdurchmesser: | Mikroskopisches Messverfahren, bei dem Faserdurchmesser mit eingespielter Messskala verglichen wird |

Staubabscheidegrad und Filterwiderstände:

| | |
|---|---|
| Methode 1: | DIN 44956/2; Entwurf November 1987 |
| Methode 2: | Palas, beschrieben in |

(a) W. Willemer, W. Mölter; Praxisnahe Überprüfung von Staubfiltern, Chemietechnik 15 (1986), Heft 12, Seiten 20-26;

(b) W. Mölter; C. Helsper; Fast and Automated Testing of Filter Media; Filtech Conference 23. bis 25.9.1987, Utrecht/Holland

| | |
|---|---|
| Anströmgeschwindigkeit: | 25 cm/Sekunde |
| Prüfluft: | 200 mg Arizona-Feinstaub (gemäss DIN 44956/2) pro Kubikmeter |
| Partikelgrössenverteilung: | 0 bis 80 $\mu$m |
| Bestaubungszeit: | 5 Minuten |

Für den Abscheidegrad ausgewertete Partikelfraktion:

0,3 bis 0,5 $\mu$m

BEISPIEL 1

Zweilagige Filterkombination:      Papieraussenlage mit Vliesfütterung
(Stand der Technik für Beutel)

Spezifikation der Filtermaterialien:

|  |  | PAPIERAUS-SENLAGE | VLIES | KOMBI-NATION |
|---|---|---|---|---|
| Flächengewicht (ISO 536) | g/m$^2$ | 50 | 20 | 70 |
| Dicke (DIN 53105) 0,2 bar | mm | 0,23 | 0,11 | 0,32 |
| Luftdurchlässigkeit (DIN 53887) | l/m$^2$.s | 350 | 2000 | 345 |
| Porendurchmesser | /um | 55 | --- | --- |
| Bruchwiderstand längs (DIN 53112) | N | 35 | 14 | --- |
| Bruchwiderstand quer (DIN 53112) | N | 20 | 5 | --- |
| Berstdruck nach Mullen (DIN 53141) | bar | 1,20 | 0,40 | --- |

Filtertechnische Eigenschaften:

| Messmethode 1 (DIN 44956/2) |  | PAPIERAUS-SENLAGE | VLIES | KOMBI-NATION |
|---|---|---|---|---|
| Abscheidegrad (Durchlassgrad) | % | 87,5(12,5) | --- | 96,5(3,5) |
| Filterwiderstand Delta p1 | mbar | 3,0 | --- | 3,1 |
| Filterwiderstand Delta p2 | mbar | 13,0 | --- | 7,0 |
| Filterwiderstandsdiffe-renz: Delta(Delta p) | mbar | 10,0 | --- | 3,9 |

| Messmethode 2 (Palas)Bestaubungszeit 5 Minuten |  | PAPIERAUS-SENLAGE | VLIES | KOMBI-NATION |
|---|---|---|---|---|
| Abscheidegrad (Durchlassgrad) | % | 87,15(12,85) | --- | 87,30(12,70) |
| Filterwiderstand Delta p1 | mbar | 1,95 | --- | 2,0 |
| Filterwiderstand Delta p2 | mbar | 7,1 | --- | 5,3 |
| Filterwiderstandsdiffe-renz Delta(Delta p) | mbar | 5,15 | --- | 3,3 |

Delta p1 = Filterwiderstand vor dem Bestauben
Delta p2 = Filterwiderstand nach den Bestauben
Delta(Delta p) = Delta p2 - Delta p1

BEISPIEL 2

Zweilagige Filterkombination:     (Papieraussenlage + Vliesfütterung) +
                                  Abluftfilter (Filtrete G 0310
                                  (Stand der Technik für Mehrfachfiltration)

Spezifikation der Filtermaterialien:

| | | PAPIERAUS-SENLAGE | VLIES | ABLUFT-FILTER | KOMB.F. ALLES |
|---|---|---|---|---|---|
| Flächengewicht (ISO 536) | g/m² | 50 | 20 | 150 | --- |
| Dicke (DIN 53105) 0,2 bar | mm | 0,23 | 0,11 | 1,4-1,5 | --- |
| Luftdurchlässigkeit (DIN 53887) | l/m².s | 350 | 2000 | 1200 | 210 |
| Porendurchmesser | /um | 55 | --- | --- | --- |
| Bruchwiderstand längs (DIN 53112) | N | 35 | 14 | --- | --- |
| Bruchwiderstand quer (DIN 53112) | N | 20 | 5 | --- | --- |
| Berstdruck nach Mullen (DIN 53141) | bar | 1,20 | 0,40 | --- | --- |

Filtertechnische Eigenschaften:

Messmethode 1 (DIN 44956/2)

| | | | | | |
|---|---|---|---|---|---|
| Abscheidegrad (Durchlassgrad) | % | 87,5(12,5) | --- | --- | 99,8(0,2) |
| Filterwiderstand Delta p1 | mbar | 3,0 | --- | --- | 4,5 |
| Filterwiderstand Delta p2 | mbar | 13,0 | --- | --- | 9,5 |
| Filterwiderstandsdifferenz: Delta(Delta p) | mbar | 10,0 | --- | --- | 5,0 |

Messmethode 2 (Palas)
Bestaubungszeit 5 Minuten

| | | | | | |
|---|---|---|---|---|---|
| Abscheidegrad (Durchlassgrad) | % | 87,15(12,85) | --- | --- | 97,71(2,29) |
| Filterwiderstand Delta p1 | mbar | 1,95 | --- | --- | 2,3 |
| Filterwiderstand Delta p2 | mbar | 7,1 | --- | --- | 10,5 |
| Filterwiderstandsdifferenz Delta(Delta p) | mbar | 5,15 | --- | --- | 8,2 |

BEISPIEL 3

Erfindungsgemässe, dreilagige Filterkombination, bestehend aus
Papieraussenlage, Zwischenvlies aus Melt-blown und Stützvlies

Spezifikation der Filtermaterialien:

| | | PAPIERAUS-SENLAGE | MELT-BLOWN VLIES | STÜTZ-VLIES | KOMBI-NATION |
|---|---|---|---|---|---|
| Flächengewicht (ISO 536) | g/m$^2$ | 43,5 | 22 | 13 | 78,5 |
| Dicke (DIN 53105) 0,2 bar | mm | 0,165 | 0,20 | 0,07 | --- |
| Luftdurchlässigkeit (DIN 53887) | 1/m$^2$.s | 350 | 440 | 2000 | 143 |
| Porendurchmesser | /um | 67 | 35 | --- | --- |
| Bruchwiderstand längs (DIN 53112) | N | 26 | 2,1 | 13 | --- |
| Bruchwiderstand quer (DIN 53112) | N | 15 | 1,7 | 4 | --- |
| Berstdruck nach Mullen (DIN 53141) | bar | 0,80 | 0,45 | 0,35 | --- |

Filtertechnische Eigenschaften:

Messmethode 1 (DIN 44956/2)

| | | | | | |
|---|---|---|---|---|---|
| Abscheidegrad (Durchlassgrad) | % | 75,9(24,1) | 92,5 (7,5) | --- | 99,8(0,2) |
| Filterwiderstand Delta p1 | mbar | 3,2 | 2,9 | --- | 7,1 |
| Filterwiderstand Delta p2 | mbar | 15,6 | 5,6 | --- | 11,5 |
| Filterwiderstandsdiffe-renz: Delta(Delta p) | mbar | 12,4 | 2,7 | --- | 4,4 |

Messmethode 2 (Palas)
Bestaubungszeit 5 Minuten

| | | | | | |
|---|---|---|---|---|---|
| Abscheidegrad (Durchlassgrad) | % | 82,26 (17,74) | 96,36 (3,64) | --- | 99,89 (0,11) |
| Filterwiderstand Delta p1 | mbar | 2,45 | 1,90 | --- | 4,1 |
| Filterwiderstand Delta p2 | mbar | 16,0 | 3,45 | --- | 9,2 |
| Filterwiderstandsdiffe-renz Delta(Delta p) | mbar | 13,55 | 1,55 | --- | 5,1 |

BEISPIEL 4

Erfindungsgemässe, dreilagige Filterkombination, bestehend aus hochwertiger Papieraussenlage, Zwischenvlies aus Melt-blown und Stützvlies

Spezifikation der Filtermaterialien:

| | | PAPIERAUS-SENLAGE | MELT-BLOWN VLIES | STÜTZ-VLIES | KOMBI-NATION |
|---|---|---|---|---|---|
| Flächengewicht (ISO 536) | g/m$^2$ | 45 | 22 | 13 | 80 |
| Dicke (DIN 53105) 0,2 bar | mm | 0,19 | 0,20 | 0,07 | --- |
| Luftdurchlässigkeit (DIN 53887) | l/m$^2$.s | 310 | 440 | 2000 | 135 |
| Porendurchmesser | /um | 51 | 35 | --- | --- |
| Bruchwiderstand längs (DIN 53112) | N | 35 | 2,1 | 13 | --- |
| Bruchwiderstand quer (DIN 53112) | N | 23 | 1,7 | 4 | --- |
| Berstdruck nach Mullen (DIN 53141) | bar | 1,30 | 0,45 | 0,35 | --- |

Filtertechnische Eigenschaften:

| | | PAPIERAUS-SENLAGE | MELT-BLOWN VLIES | STÜTZ-VLIES | KOMBI-NATION |
|---|---|---|---|---|---|
| Messmethode 1 (DIN 44956/2) | | | | | |
| Abscheidegrad (Durchlassgrad) | % | 90,0 (10,0) | 92,5 (7,5) | --- | >99,8 (<0,2) |
| Filterwiderstand Delta p1 | mbar | 3,5 | 2,9 | --- | 7,3 |
| Filterwiderstand Delta p2 | mbar | 12,0 | 5,6 | --- | 11,5 |
| Filterwiderstandsdiffe-renz: Delta(Delta p) | mbar | 8,5 | 2,7 | --- | 4,2 |

| | | PAPIERAUS-SENLAGE | MELT-BLOWN VLIES | STÜTZ-VLIES | KOMBI-NATION |
|---|---|---|---|---|---|
| Messmethode 2 (Palas) Bestaubungszeit 5 Minuten | | | | | |
| Abscheidegrad (Durchlassgrad) | % | 95,65 (4,35) | 96,36 (3,64) | --- | 99,94 (0,06) |
| Filterwiderstand Delta p1 | mbar | 2,05 | 1,9 | --- | 4,4 |
| Filterwiderstand Delta p2 | mbar | 16,7 | 3,45 | --- | 8,8 |
| Filterwiderstandsdiffe-renz Delta(Delta p) | mbar | 14,65 | 1,55 | --- | 4,4 |

Die vergleichende Gegenüberstellung der filtertechnischen Eigenschaften für die verschiedenen Filterversionen (Beispiele 1 bis 4) zeigt, dass die erfindungsgemässen Beutelversionen (Beispiel 3 und 4) einen wesentlich höheren Abscheidegrad für Stäube im Vergleich zu den herkömmlichen, hochwertigen Doppellagenbeuteln (Beispiel 1) erzielen. Die neue Beutelversion ermöglicht Abscheidegrade, speziell für Feinstpartikel, die selbst den aufwendigen Systemen der Mehrfachfiltration (Beispiel 2) überlegen sind. Die Filterwiderstandsdifferenzen Delta (Delta p), die als ein Mass für die Verstopfungsneigung der Filter betrachtet werden können, liegen für die erfindungsgemässen Filterkombinationen deutlich unterhalb der Werte für die mit einem Abluftfilter nachgeschaltete zweilagige Filterkombination und sind gegenüber den Werten für die zweilagige Filterversion ohne Abluftfilter nicht wesentlich erhöht.

**Patentansprüche**

1. Staubfilterbeutel mit einer Filterpapieraußenlage und einem innenliegenden Vlies, dadurch gekennzeichnet, dass das Vlies ein Feinfaservlies mit einem Flächengewicht (ISO 536) von 10 bis 50 g/m², einer Luftdurchlässigkeit (DIN 53887) von 200 bis 1500 l/m²-spel bei 2 mbar Druck, einem durchschnittlichen Faserdurchmesser von 0,5 bis 18 μm und einem Bruchwiderstand (DIN 53112) in der Längsrichtung von 2 bis 12 N/15 mm Streifenbreite und in der Querrichtung von 1 bis 10 N/15 mm Streifenbreite darstellt, und die Filterpapieraußenlage ein Flächengewicht (ISO 536) von 30 bis 80 g/m² und eine Luftdurchlässigkeit (DIN 53887) von 80 bis 500 l/m²·s bei 2 mbar Druck aufweist.

2. Staubfilterbeutel nach Anspruch 1, dadurch **gekennzeichnet**, dass das Feinfaservlie ein Melt-Blown-Vlies darstellt.

3. Staubfilterbeutel nach Ansrpuch 1 und 2, dadurch **gekennzeichnet**, dass das Feinfaservlie aus einem themoplastischen Material, bevorzugt Polyolefin, Polyamid, Polyester oder Copolymere davon, aufgebaut ist.

4. Staubfilterbeutel nach Anspruch 1 und 2, dadurch **gekennzeichnet**, daß das Feinfaservlies aus Mikroglasfasern besteht.

5. Staubfilterbeutel nach einem oder mehreren der vorhergehenden Ansprüche, dadurch **gekennzeichnet**, daß das Feinfaservlies eine permanente elektrostatische Ladung enthält.

6. Staubfilterbeutel nach einem oder mehreren der vorhergehenden Ansprüche, dadurch **gekennzeichnet** , dass das Feinfaservlies eine Dicke (DIN 53105) von 0,15 bis 0,4 mm, vorzugsweise 0,18 bis 0,30 mm, aufweist.

7. Staubfilterbeutel nach einem oder mehreren der vorhergehenden Ansprüche, dadurch **gekennzeichnet**, dass der Porendurchmesser des Feinfaservlieses 15 bis 60 μm, vorzugsweise 30 bis 40 μm, beträgt.

8. Staubfilterbeutel nach einem oder mehreren der vorhergehenden Ansprüche, dadurch **gekennzeichnet**, dass das Feinfaservlies durch ein Stützelement verstärkt ist.

9. Staubfilterbeutel nach Anspruch 8, dadurch **gekennzeichnet** , dass das Stützelement ein poröses Vlies aus Zellstoff, Synthesefasern bzw. -filamenten oder Mischungen daraus darstellt, das nach dem Naßlegeverfahren, dem Trockenlegeverfahren, dem Spunlace-Verfahren oder dem Spun-Bond-Verfahren erhältlich ist.

10. Staubfilterbeutel nach Anspruch 8 oder 9, dadurch **gekennzeichnet** , dass das Stützvlies ein Flächengewicht (ISO 536) von 6 bis 40 g/m², vorzugsweise 8 bis 20 g/m², eine Dicke (DIN 53105) von 0,05 bis 0,35 mm, vorzugsweise 0,07 bis 0,25 mm, eine Luftdurchlässigkeit (DIN 53887) von 500 bis 4000 l/m²·s bei 2 mbar Druck, vorzugsweise 1000 bis 2000 l/m²·s bei 2 mbar Druck, und einen Bruchwiderstand (DIN 53112) in Längsrichtung von mehr als 8 N/15 mm Streifenbreite und in Querrichtung von mehr als 3 N/15 mm Streifenbreite besitzt.

11. Staubfilterbeutel nach einem oder mehreren der vorhergehenden Ansprüche, dadurch **gekennzeichnet**, dass die Filterpapieraußenlage aus lang- und kurzfaserigen Zellstoffen oder aus Mischungen der Zellstoffe mit Synthesefasern und/oder Glasfasern besteht.

12. Staubfilterbeutel nach einem oder mehreren der vorhergehenden Ansprüche, dadurch **gekennzeichnet**, dass die Dicke (DIN 53105) der Filterpapieraußenlage 0,10 bis 0,3 mm beträgt.

13. Staubfilterbeutel nach einem oder mehreren der vorhergehenden Ansprüche, dadurch **gekennzeichnet**, dass der Porendurchmesser in der Filterpapieraußenlage ein Wert von 35 bis 80 μm, vorzugsweise 40 bis 70 μm, besitzt.

14. Staubfilterbeutel nach einem oder mehreren der vorhergehenden Ansprüche, dadurch **gekennzeichnet**, dass der Bruchwiderstand (DIN 53112) der Filterpapieraußenlage in Längsrichtung 20 bis 70 N/15 mm Streifenbreite, in Querrichtung 15 bis 45 N/15 mm Streifenbreite beträgt.

**15.** Staubfilterbeutel nach einem oder mehreren der vorhergehenden Ansprüche, dadurch **gekennzeichnet**, daß bei der Herstellung des Feinfaservlieses dessen Feinfasern direkt auf die Filterpapieraußenlage abgelegt und im thermoplastischen Zustand mit dem Filterpapier verbunden werden.

**16.** Verfahren zur Herstellung des Staubfilterbeutels nach einem oder mehreren der vorhergehenten Ansprüche, dadurch **gekennzeichnet, dass die** Filterpapieraußenlage, das Feinfaservlies und gegebenenfalls das Stützelement auf separaten Behnen der Beutelmaschine zugeführt und dort in an sich bekannter Weise zum Beutel verarbeitet werden.

**17.** Verfahren zur Herstellung des Staubfilterbeutels nach Anspruch 16 dadurch **gekennzeichnet**, daß das Feinfaservlies und das Stützelement vor der Zuführung zur Beutelmaschine zu einer Bahn zusammengeführt und verbunden werden, und dann die gebildete Kombination und die Filterpapieraußenlage auf zwei Bahnen der Beutelmaschine zugeführt und in bekannter Weise zum Beutel weiterverarbeitet werden.

**18.** Verwendung der Staubfilterbeutel nach Anspruch 1-15 in Staubsaugern zur Abscheidung von Teilchen grösser gleich 0,1 $\mu$m.

**19.** Verwendung der Staubfilterbeutel nach Anspruch 1-15 zur Toner-Absaugung in Kopiergeräten.

## Claims

**1.** A dust filter bag comprising a filter paper outer layer and an inner non-woven material, characterised in that the non-woven material consists of a fine fibred non-woven material with a weight per unit area (ISO 536) of 10 to 50 g/m$^2$, a permeability to air (DIN 53887) of 200 to 1500 l/m$^2$.s at a pressure of 2 mbar, an average fibre diameter of 0,5 to 18 $\mu$m, and a breaking strength (DIN 53112) in the longitudinal direction of 2 to 12 N/15 mm per width of strip and in the transverse direction of 1 to 10 N/15 mm per width of strip, and the filter paper outer layer has a weight per unit area (ISO 536) of 30 to 80 g/m$^2$ and a permeability to air (DIN 53887) of 80 to 500 l/m$^2$.s at a pressure of 2 mbar.

**2.** A dust filter bag as claimed in Claim 1, characterised in that the fine fibred non-woven material is a melt-blown non-woven material.

**3.** A dust filter bag as claimed in Claim 1 and 2, characterised in that the fine fibred non-woven material is constructed from a thermoplastic material, preferably polyolefin, polyamide, polyester or copolymers thereof.

**4.** A dust filter bag as claimed in Claims 1 and 2, characterised in that the fine fibred non-woven material is composed of micro-glass fibres.

**5.** A dust filter bag as claimed in one or more of the preceding claims, characterised in that the fine fibred nonwoven material contains a permanent electrostatic charge.

**6.** A dust filter bag as claimed in one or more of the preceding claims, characterised in that the fine fibred nonwoven material has a thickness (DIN 53105) of 0.15 to 0.4 mm, preferably 0.18 to 0.30 mm.

**7.** A dust filter bag as claimed in one or more of the preceding claims, characterised in that the pore diameter of the fine fibred non-woven material amounts to 25 to 60 $\mu$m, preferably 30 to 40 $\mu$m.

**8.** A dust filter bag as claimed in one or more of the preceding claims, characterised in that the fine fibred nonwoven material is reinforced by a support element.

**9.** A dust filter bag as claimed in Claim 8, characterised in that the support element consists of a porous non-woven material composed of cellulose, synthetic fibres or filaments or mixtures thereof, which can be produced by the wet folding method, the dry folding method, the spun-lace method or the spun-bond method.

**10.** A dust filter bag as claimed in Claim 8 or 9, characterised in that the support non-woven material has a weight per unit area (ISO 536) of 6 to 40 g/m$^2$, preferably 8 to 20 g/m$^2$, a thickness (DIN 53105) of 0,05 to 0,35 mm, preferably 0,07 to 0,25 mm, a permeability to air (DIN 53887) of 500 to 4000 l/m$^2$,s at a

pressure of 2 mbar, preferably 1000 to 2000 l/m²,s at a pressure of 2 mbar, and a breaking strength (DIN 53112) in the longitudinal direction of more than 8 N/15 mm per width of strip and in the transverse direction of more than 3 N/15 mm per width of strip.

11. A dust filter bag as claimed in one or more of the preceding claims, characterised in that the filter paper outer layer consists of long-fibred and short-fibred cellulose materials or of mixtures of the cellulose materials with synthetic fibres and/or glass fibres.

12. A dust filter bag as claimed in one or more of the preceding claims, characterised in that the thickness (DIN 53105) of the filter paper outer layer amounts to 0.10 to 0.3 mm.

13. A dust filter bag as claimed in one or more of the preceding claims, characterised in that the pore diameter in the filter paper outer layer has a value of 35 to 80 μm, preferably 40 to 70 μm.

14. A dust filter bag as claimed in one or more of the preceding claims, characterised in that the breaking strength (DIN 53112) of the filter paper outer layer in the longitudinal direction amounts to 20 to 70 N/15 mm per width of strip and in the transverse direction amounts to 15 to 45 N/15 mm per width of strip.

15. A dust filter bag as claimed in one or more of the preceding claims, characterised in that in the production of the fine fibred non-woven material, its fine fibres are directly deposited upon the filter paper outer layer and are connected in the thermoplastic state to the filter paper.

16. A process for the production of the dust filter bag claimed in one or more of the preceding claims, characterised in that the filter paper outer layer, the fine fibred non-woven material and optionally the support element are supplied via separate channels to the bag machine and are processed therein in a manner known per se to form the bag.

17. A process for the production of the dust filter bag as claimed in Claim 16, characterised in that, before they are supplied to the bag machine the fine fibred non-woven material and the support element are combined to form one channel and are joined, whereupon the formed combination and the filter paper outer layer are supplied via two channels to the bag machine and are further processed in a manner known per se to form the bag.

18. The use of the dust filter bags claimed in Claims 1 to 15 in vacuum cleaners for the collection of particles greater than or equal to 0,1 μm.

19. The use of the dust filter bags claimed in Claims 1 to 15 for the suction removal of toner in copiers.

## Revendications

1. Sac de filtration de poussière, comportant une couche extérieure en papier filtrant et un matelas de fibres intérieure, caractérisé en ce que le matelas de fibres présente un poids surfacique (ISO 536) allant de 10 à 50 g/m², une perméabilité à l'air (DIN 53887) allant de 200 à 1500 l/m².s,sous une pression de 2 mbar, un diamètre de fibres moyen allant de 0,5 à 18 μm et une résistance à la rupture (DIN 53112) en direction longitudinale allant de 2 à 12 N/15 mm de largeur de bande et, en direction transversale, de 1 à 10 N/15 mm de largeur de bande, et la couche extérieure en papier filtrant présentant un poids surfacique (ISO 536) allant de 30 à 80 g/m2 et une perméabilité à l'air (DIN 53887) allant de 80 à 500 l/m².s, sous une pression de 2 mbar.

2. Sac de filtration de poussière selon la revendication 1, caractérisé en ce que le matelas de fibres fines constitue un matelas soufflé à l'état fondu.

3. Sac de filtration de poussière selon les revendications 1 et 2, caractérisé en ce que le matelas à fibres fines est composé en un matériau thermo-plastique, de préférence une polyoléfine, un polyamide, un polyester ou un copolymère de celui-ci.

4. Sac de filtration de poussière selon les revendications 1 et 2, caractérisé en ce que le matelas à fibres fines est en microfibres de verre.

**5.** Sac de filtration de poussière selon l'une ou plusieurs des revendications précédentes, caractérisé en ce que le matelas à fibres fines contient une charge électrostatique permanente.

**6.** Sac de filtration de poussière selon l'une ou plusieurs des revendications précédentes, caractérisé en ce que le matelas à fibres fines présente une épaisseur (DIN 53105) allant de 0,15 à 0,4 mm, de préférence de 0,18 à 0,30 mm.

**7.** Sac de filtration de poussière selon l'une ou plusieurs des revendications précédentes, caractérisé en ce que le diamètre des pores du matelas à fibres fines est de 25 à 60 µm, de préférence de 30 à 40 µm.

**8.** Sac de filtration de poussière selon l'une ou plusieurs des revendications précédentes, caractérisé en ce que le matelas à fibres fines est renforcé par un élément d'appui.

**9.** Sac de filtration de poussière selon la revendication 8, caractérisé en ce que l'élément d'appui constitue un matelas de fibres en substance alvéolaire, fibres de synthèses, respectivement filaments de synthèse, ou un mélange de ceux-ci, obtenu suivant le procédé de pose humide, le procédé de pose sèche, le procédé à mise en place par filage ou le procédé à liaison filé.

**10.** Sac de filtration de poussière selon la revendication 8 ou 9, caractérisé en ce que le matelas de fibre d'appui présente un poids surfacique (ISO 536) allant de 6 à 40 g/m², de préférence de 8 à 20 g/m², une épaisseur (DIN 53105) allant de 0,05 à 0,35 mm, de préférence de 0,07 à 0,25 mm, une perméabilité à l'air (DIN 53887) allant de 500 à 4000 l/m².s sous une pression de 2 mbar, de préférence de 1000 à 2000 l/m².s sous une pression de 2 mbar, et une résistance à la rupture (DIN 53112) en direction longitudinale supérieure à 8 N/15 mm de largeur de bande et, en direction transversale, supérieure à 3 N/15 mm de largeur de bande.

**11.** Sac de filtration de poussière selon l'une ou plusieurs des revendications précédentes, caractérisé en ce que la couche extérieure en papier filtrant est composée de substances alvéolaires, à fibres longues et courtes, ou de mélanges des substances alvéolaires avec des fibres de synthèse et/ou des fibres de verre.

**12.** Sac de filtration de poussière selon l'une ou plusieurs des revendications précédentes, caractérisé en ce que l'épaisseur (DIN 53105) de la couche extérieure en papier filtrant va de 0,10 à 0,3 mm.

**13.** Sac de filtration de poussière selon l'une ou plusieurs des revendications précédentes, caractérisé en ce que le diamètre de pores dans la couche extérieure en papier filtrant est compris entre 35 et 80 µm, de préférence entre 40 et 70 µm.

**14.** Sac de filtration de poussière selon l'une ou plusieurs des revendications précédentes, caractérisé en ce que la résistance à la rupture (DIN 53112) de la couche extérieure en papier filtrant est, dans la direction longitudinale, comprise entre 20 et 70 N/15 mm de largeur de bande et, en direction transversale, comprise entre 15 et 45 N/15 mm de largeur de bande.

**15.** Sac de filtration de poussière selon l'une ou plusieurs des revendications précédentes, caractérisé en ce que, lors de la fabrication du matelas à fibres fines, ses fibres fines sont posées directement sur la couche extérieure en papier filtrant et liées au panier filtrant, à l'état thermoplastique.

**16.** Procédé de fabrication du sac de filtration de poussière selon l'une ou plusieurs des revendications précédentes, caractérisé en ce que la couche extérieure en papier filtrant, le matelas à fibres fines et, le cas échéant, l'élément d'appui, sont amenées en bandes séparées à la machine à former des sacs et y sont traités de manière connue, pour fabriquer des sacs.

**17.** Procédé de fabrication du sac de filtration de poussière selon la revendication 16, caractérisé en ce que le matelas à fibres fines et l'élément d'appui sont assemblés en une bande, avant l'amenée à la machine à former des sacs, et reliés, la combinaison formée et la couches extérieure en papier filtrant étant ensuite amenées sur deux bandes, à la machine à former des sacs, et soumis, de manière connue, à la suite du traitement, afin d'obtenir des sacs.

**18.** Utilisation du sac de filtration de poussière selon les revendications 1 à 15, dans des aspirateurs à poussière, en vue d'opérer la séparation de particules de taille supérieure à 0,1 µ.

19. Utilisation du sac de filtration de poussière selon les revendications 1 à 15, en vue d'opérer l'extraction par aspiration du toner, dans des appareils à copier.

# Fig. 1a

### Anordnung der einzelnen Filterkomponenten im erfindungsgemässen Staubfilterbeutel

Reingasseite

VERSION A

Filterpapieraussenlage ( I )

Feinfaservlies ( II )

Stützelement separat ( III )

Anströmseite

Reingasseite

VERSION B

Filterpapieraussenlage ( I )

Feinfaservlies ( II ) kaschiert
mit Stützelement ( III )

Anströmseite

Reingasseite

VERSION C

Filterpapieraussenlage ( I )

Stützelement ( III ) kaschiert
mit Feinfaservlies ( II )

Anströmseite

17

# Fig. 1b

Reingasseite

Anströmseite

VERSION D

Filterpapieraussenlage (I)

Feinfaservlies (II) verfestigt
(z.B. punktkalandriert)

Reingasseite

Anströmseite

VERSION E

Filterpapieraussenlage (I)

Feinfasern direkt bei der Herstellung des Feinfaservlieses (II)
auf Filterpapieraussenlage abgelegt

# Fig. 2
### Beutelfertigung

### 1. Rohbeutelschlauch

# Fig. 2a

Längsklebenähte

Vliesfutter im Falle von
Mehrlagenbeutel

### 2. Rohbeutel

# Fig. 2b

Laschen des Blockbodens

### 3. Konfektionierter Beutel

# Fig. 2c

Wickelboden

Halteplatte